# EUROPEAN PATENT SPECIFICATION

(11) **EP 1 546 735 B1**
(45) Date of publication and mention of the grant of the patent: **02.11.2006**
(21) Application number: 03753499.7
(22) Date of filing: 02.10.2003
(51) Int. Cl.: G01N 35/00

(54) **LABORATORY WORKSTATION FOR PROVIDING SAMPLES**
ARBEITSPLATZ ZUR BEREITSTELLUNG PROBEN
POSTE DE TRAVAIL DE LABORATOIRE SERVANT A FOURNIR DES PRELEVEMENTS

(30) Priority: 04.10.2002 DE 10246211
(43) Date of publication of application: 29.06.2005
(73) Proprietor: HTE Aktiengesellschaft The High Throughput Experimentation Company, 69123 Heidelberg (DE)
(72) Inventor: CROSS, Alexander, 55131 Mainz (DE); STRASSER, Andreas, 69239 Neckarsteinach (DE); GUELLICH, Frank, 69207 Sandhausen (DE)
(74) Representative: Jones Day
(86) International application number: PCT/EP2003/010976
(87) International publication number: WO 2004/030819

(56) References cited:
- EP-A- 0 348 077
- FR-A- 2 068 008
- FR-A- 2 714 465
- GB-A- 2 327 628
- US-A- 5 150 937
- US-A- 5 305 650
- US-A- 5 492 023
- PATENT ABSTRACTS OF JAPAN vol. 2002, no. 03, 3 April 2002 (2002-04-03) & JP 2001 310284 A (TOSHIBA MACH CO LTD), 6 November 2001 (2001-11-06)

## Description

The present invention relates to a workstation for the handling of chemicals and containers, in particular of containers as used in a laboratory, in combination with a metering device for solids and liquids. Thereby, the workstation comprises at least: (i) a platform, which has at least one module with at least one reservoir for a sample and at least one module with at least one target container, (ii) a metering system for the metering of the sample, (iii) a portal system, which is arranged above the platform and which maneuvers the metering system in all three directions in space, (iv) a control device for controlling the movements of the metering system, and (v) a measuring system for the samples. Thereby, the metering system (ii) has a gripper device for the uptake of a metering tool and/or of the containers, and said metering tool is supported within at least one module on the platform. The metering system has a vibration device in order to excite the metering tool into a defined vibration.

Commercially available devices, which in general contain the use of gripper systems for the metering of solids, belong to the state of the art. For example, the company "Chemspeed" (see their webpage "www.chemspeed.com") offers such devices. The known systems of the state of the art have the drawback that besides the missing convertibility between gripper and metering systems only a very limited metering of solids is realized. Therefore, it is for example not possible to meter at the same time large quantities of the one substance and small quantities of the same or another substance.

Further, commercial available metering systems for the uptake and dispense of samples of solids are available from following companies: AutoDose (CH) or Zinser-Analytic GmbH (DE). Extra designs and developments in this field are possible with following companies: Labman Automation Ltd. (GB) and Mettler-Toledo Ltd. (GB).

Exemplified are the following documents: The DE 100 37 127 A 1 relates to a metering system and a process for the metering for several components, wherein the both different components are solids, respectively, which are dissolved in a bath and are then metered event-driven and time-driven. Said document does not give any teaching about the metering of solids per se. The GB 2 371 767 A relates to a device for the dissolving of (solid) materials, wherein these are dissolved by means of a shaking machine as well as by means of ultrasonic in turn within a bath, and which are treated subsequently according to the known methods of the metering of liquids. Finally, the EP-B 0 894 257 describes a process for the metering of solids per se. Thereby, a flexible lagging is applied, which encloses the actual metering mechanism, for example a movable piston, in a way that the chemical to be dispensed is protected from air and water.

US 5 305 650 relates to an automatic preparation apparatus comprising turntable means for mounting a plurality of containers including sample containers and rack means. The rack means are provided at a stationary position separate from the turntable means. The apparatus is suited for mounting a plurality of sample containers, robot means for transfer sample containers and control means.

EP 348 077 relates to an automatic rotary weighing and packaging machine having a plurality of weighers that are radially or annularly arranged on a circular rotary table. The apparatus is used for filling a product at respective positions around the table and is especially suitable in case where product to be packed is a sticky granular or powdered bulk material and the packing container is a bag or the like.

US 5 150 937 relates to a work pickup apparatus that has a pickup main body and at least three pickup segments that are radially movable from the center of the pickup main body. This apparatus allows to pickup a work having a triangle shape or non-parallel surfaces contacting finger members. The apparatus is essentially used for heavy-duty machinery.

A drawback for all the named systems is the missing compatibility for typical laboratory containers, a limited range of metering for (incompressible and inhomogeneous) solids, and in particular the high costs, which arise for each metering system and extension module.

Therefore, it was one object of the invention to provide a workstation, which allows the manipulation of containers, in particular of conventional containers, which are used in a laboratory, as well as the metering of solid components over a broad range of weight and/or volume, and which also takes account of the fact that in particular in the synthesis of materials, which substantially contain inorganic components, different containers and metering systems are to be supplied, which should be replaced as simply and cost-effectively as possible.

This object is achieved thereby that a workstation for the handling of chemicals and containers, in particular of containers used in a laboratory, is provided, which first of all is characterized by a combination of a metering device for solids with a metering device for liquids. Thereby, the workstation comprises at least: (i) a platform, which has at least one module with at least one reservoir for a sample and at least one module with at least one target container, (ii) a metering system for the metering of the sample, (iii) a portal system, which is arranged above the platform and which maneuvers the metering system in all three directions in space, (iv) a control device for controlling the movements of the metering system, and (v) a measuring system for the samples. Thereby, the metering system (ii) has a gripper device for the uptake of a metering tool and/or of the containers, and said metering tool is supported within at least one module on the platform. The metering system has a vibration device in order to excite the metering tool into a defined vibration.

The workstation of the invention with its portal system is for the handling of containers within the platform. Thereby, at least two modular exchangeable metering systems are existent. With the metering system (1) thereby any defined quantities of a solid can be taken up from a container, can be transferred into another container and can be metered by means of a gravimetric load cell. With the metering system (2) any defined quantities of liquids can be transferred from a reservoir into a target container.

The metering systems are characterized by a gripper device, which is part of said metering system. The advantage of the gripper device is that the gripper can handle any container sizes with a broad spectrum of tolerance as well as individual devices for the metering of solids and liquids. This is made possible by the electro-pneumatic drive, which allows on the one hand an electric controlled adjustment to different container and object sizes, and on the other hand a pneumatic clamping for the lifting and transport of containers and metering devices.

Further advantages of said embodiment are: by means of the handling of containers of most different dimension and tolerance the system is essentially more flexible than operating systems according to the state of the art within the laboratory sector. Consequently, manual processes in the laboratory sector are easier to reproduce and to automate with the workstation of the invention.

Moreover, by means of the combined metering system an uptake and metering of solid substances of different consistency and different flow behavior is achieved. By means of the selected construction the gripper device possesses an universal application in the field of automated handling and gravimetric metering of solids in the laboratory sector. This advantage is outlined by the simplicity of the construction and the low production costs resulting thereof.

In the following, the individual components of the workstation of the invention are described and are presented in their preferred embodiments.

### Handling of objects

An "object" in the meaning of the present invention is any item, which is controlled by the gripper device (subsequently also termed as "gripper") or can be controlled. In a preferred embodiment the objects are containers as for example beakers, porcelain bowls, weighing containers, micro titer plates, reaction vessels (flasks) or tubes, as well as metering tools.

The basic functionality of the gripper is determined by four vertically positioned support means, which clamp an object by means of pneumatic force transmission. As "support means" any device can be applied, which imposes or transfers a force action upon said object, so that the object is gripped so tight that it can be moved in all three directions in space. In a preferred embodiment, the support means is formed as pin. Furthermore, it is preferred, when the gripper device has four support means, wherein two support means are faced diametrically, respectively, and the support means are movable in a concentric manner towards each other or away from each other.

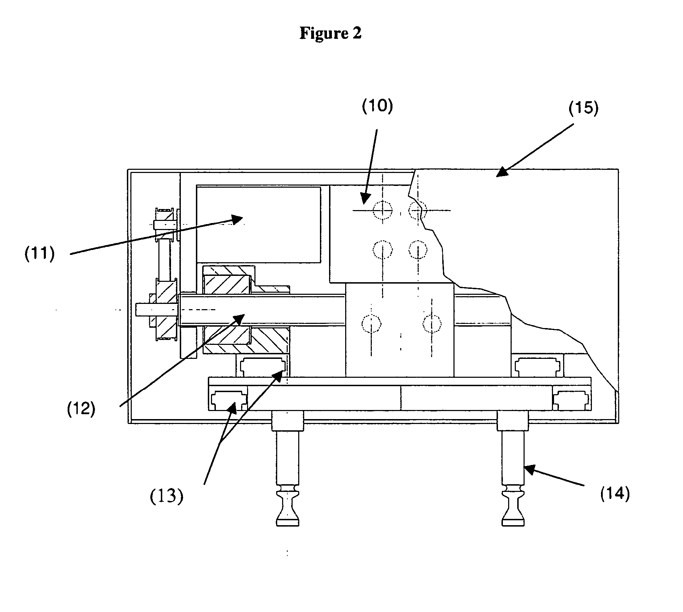

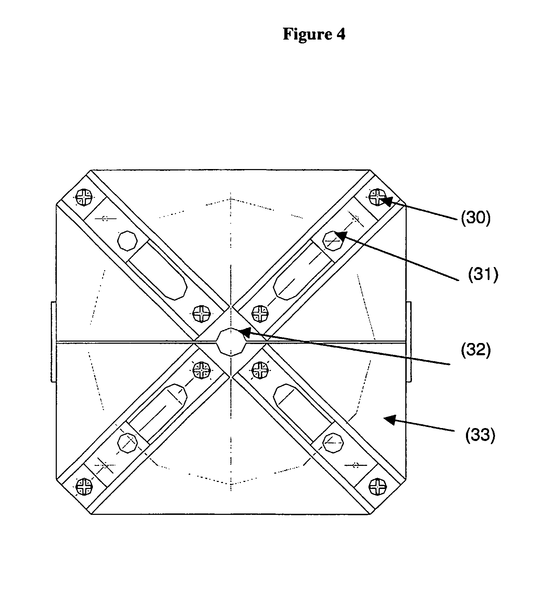

The support means are guided by means of two linear oriented pairs of slide bars and are adjusted by means of two jackscrews and bushings by means of an electric drive. Thereby, both pairs of slide bars are arranged perpendicularly towards each other (see figure 4). By means of the mechanical adjustment of the jackscrews, the gripper radius of the pins can be adjusted in a user-defined manner. By means of the pneumatic clamping tolerances in the container sizes and/or asymmetries are compensated and a force-fit connection between object and the support means is provided. For the (preferred) case that the support means are realized as pins, the pins are provided with individual or also with several grooves in order to support a form-fit connection (see figure 2).

In principle, at least two support means must exist. It is preferred to use three or four support means. In a preferred embodiment, the support means are arranged in a way to allow a clamping, which is form-complementary with the geometry of the object, which is to be clamped.

The support means are coated at least in the area, which at least can partially contact an object, with a material, which increases the adhesion in order to reinforce the holding force.

The mounting and fixing of the support means with the slide bars is characterized by the elements "mounting", "spring element" and "sensor". By means of the combination of sensor and spring element errors in the vertical motion and/or also tolerances are realized and compensated, respectively.

The fastening of the support means can be provided with any fastening means, which is known to the one skilled in the art, and which enables to replace the support means without damage. It is preferred to carry out the fastening of the support means by means of screw connection. This enables a fast change and replacement (exchange) of the support means.

Furthermore, said connection is predetermined as breaking point in order to reduce or to avoid an overload of the total construction in case of damage. In case of an overload of the spring elements and the response of the sensors, indeed anyway an adequate signal is transferred to the superior control system, which stops the operating sequence and/or avoids any further strain.

The control of the jackscrews, which drive one or more of the support means, is realized by means of an electric drive, preferably by a servo drive. By means of an adequate positioning control of the drive, the support means are adapted to a before defined diameter of the object by means of the jackscrews. Thereby, as already mentioned above, it is preferred that for the "effective" clamping the support means are controlled in a pneumatic manner.

In a preferred embodiment, the gripper device possesses a sensor, which controls the clamping process. As such a sensor for example a proximity switch can be applied. Such proximity switches are commercially available. Their function is to send out a signal when approaching an object to a certain, predefined value, which enables to stop, to slow down or to invert the motion process. Mechanic, electric, magnetic, acoustic processes, processes based on ultrasonic, IR-optic as well as further processes are conceivable for the detection of an approach.

Moreover, within the gripper device further drives are integrated, in order to provide further functions of the gripper device. In addition, the gripper device is characterized in that an unbalanced anchor is mounted at the wall of the housing. By means of the rotation of the unbalance a vibration is created in the complete gripper device, which finds application in combination with the metering device. Hereby, the direction of the impetus of the vibration is determined by the rotation axis (axes) of the unbalance. The intensity of the impetus of the vibration is determined by the velocity of the rotation, the bearing or the mounting of the gripper device at the axes of the system as well as by the vis inertiae of the gripper device.

### Metering of media

One type of objects, which are held by the support means and can be operated from the portal system are means for metering (metering systems). The purpose of a metering system in the meaning of the present invention is to meter fluid and/or solid media into at least on container. Accordingly, it is differentiated between a metering system (1) for the metering of solid phases (solids) and a metering system (2) for the metering of fluid phases.

The metering system (1) is based on a combination of the before-described gripper device and an additional metering tool (1). Herein, the gripper device serves for taking up and for the guidance of the metering tool. The metering tool (1) is for the uptake and dispense of solids and is characterized by the following properties: (i) hold point for the fixing within the gripper device, (ii) hold point for the fixing at a put down point, (iii) distance pin for the separation of the product-touching parts with the hold points, (iv) carrier surface for the uptake and transport of solids.

The carrier surface can be any surface, which can carry a solid. In particular, it can be asymmetric or irregular. In a preferred embodiment the carrier surface is characterized by a rotationally symmetric surface with a defined horizontal surface and by a limiting edge, which is vertical or in an angle to said surface. The dimensions of the limiting edge respective to angle, radius of the edge and height of the edge are adapted to the maximal vibration intensity of the gripper device.

In a preferred embodiment, the metering tool is formed as an integral device and in particular, the carrier surface is formed in a way that the uptake of a solid, powdery educt is possible. Furthermore, it is preferred that incline and/or height of the limiting edge are formed in a way that they are adapted to the solid, typical powdery educt, which is to be taken up. So, for example, a smooth trickling, flowable agent will typically perform a higher, less strong inclined edge. The best embodiment can be determined by a selection of different metering tools in an empiric manner.

With the preferred embodiment of the carrier surface (rotationally symmetric surface with limiting edge) the quantity of solid is maximized, which can be carried by means of the carrier surface. The uptake of the sample is carried out by means of a circulating (spiral, "drilling") dunking and a vertical extraction of the carrier surface and the solids being thereon from a reservoir. The dispense and metering of said solid sample is carried out by means of exciting of vibration paired with a gravimetric measurement of the metered solid.

The process for the metering is characterized in that the motion sequences and the measured changes in the weight in connection with the before described gripper device and the metering system is operated and controlled by means of a software algorithm. The process is based on a self-optimizing algorithm, which adjusts the vibration duration and vibration intensity in dependence on the required quantity of the sample.

Therefore, it is also a substantial feature of the present invention that the metering system provides a vibration device, which enables to excite the metering tool into a defined vibration. For this, preferably the above in connection with the gripper device discussed and defined introduced unbalance is applied.

Thereby, the quantity of the sample, which is carried on the carrier surface, and the already metered quantity of the sample are measured gravimetrically and the difference with the required metering quantity is adjusted. After adjusting said metering quantities, the vibration intensity and vibration duration are modified by the dispense algorithm. Furthermore, the process is characterized in that interruption criteria can be defined in form of weight tolerance limits and/or also metering periods.

The self-optimizing metering algorithm is composed of a nesting of at least two regression loops ("Do While"- loop), as well as a chaining of at least one further regression loop of at least one metering parameter.

In the preferred embodiment, three regression loops [(i) detecting of the surface of the powder which is to be metered, (ii) adaptation of the quantity of powder taken up with the quantity of powder to be dispensed and (iii) adaptation of the dispensed powder with the already taken up but not yet dispensed powder] are chained with each other and are nested with another loop (adaptation of the metered effective quantity with the required target quantity). Additionally, five parameters (vibration duration Vₜ, vibration intensity Vₛ, maximum quantity of powder which can be taken up, the quantity of powder which remains on the metering tool, last dunking position of the metering tool into the reservoir) are defined and are optimized in the cycle of each metering in dependence on the metering characteristic of the powder.

The algorithm for the dispense of the powder is characterized by another regression loop for the increase or decrease of the vibration intensity and duration in dependence on the dispensed quantity. Hereby, the vibration duration and intensity are regulated in dependence on the flow behavior.

The flow behavior is calculated from the measured change in weight within the measured metering time (summary of vibration duration and settling time of the gravimetric measurement). The metering algorithm is started with at least one, in the preferred embodiment with four, basic setting(s) of the parameters Vₜ and Vₛ [(1). V_{t,max}. V_{s,min}., (2). V_{t,max}. V_{s,max}., (3). V_{t,min}. V_{s,min}.,(4). V_{t,min}. V_{s,max}.]. The flow behavior of the previous metering is controlled for the next iteration step by the algorithm and is used as characteristic value for the estimation and calculation of the new values for Vₜ and Vₛ.

For the better understanding of the four basic settings of the preferred embodiment, the correlation between flow behavior and vibration parameters are given in the following:

| | |
|---|---|
| High vibration intensity, long vibration duration = | badly flowing |
| Low vibration intensity, short vibration duration = | smoothly flowing |
| High vibration intensity, short vibration duration = | badly flowing |

In case of inhomogeneous flow properties:

| | |
|---|---|
| Low vibration intensity, long vibration duration = | smoothly flowing |

The metering system (2) is for the metering of fluid media, preferably of liquids. The quantities of liquids, which are required for the preparation process can be dispensed by means of single, multiple and parallel metering. By connecting the before described systems, in particular the gripper device, to a commercial system for pipetting of liquids, pipetting steps can be controlled by means of the software. Herewith it is outlined once again that said commercial pipetting robots - contrary to the present invention - do not permit a simultaneous or also parallel metering of solid components. Moreover, the commercial pipetting systems are only designed for the metering of smaller quantities.

The metering system (2) is based on a combination of the before described gripper device with an additional metering tool (2). The metering tool (2) is for the uptake and dispense of liquids and is characterized by the following properties: (i) hold point for the fixing within the gripper, (ii) hold point for the fixing on a put down point, (iii) canula for the pipetting of liquids, (iv) adapter for connecting with a pipe for liquids, (v) single pump for delivering of liquids, (vi) shut-off valve, (vii) connecting pipe to a reservoir or waste container. Additionally, a commercial station for rinsing and purification for the cleaning of the canula is used.

The metering tool (1) as well as the metering tool (2) is characterized in, respectively, that it possesses a support sector with a geometry for clamping in a form-complementary manner into support means, preferably within the gripper, of a metering system, as well as at least one further support sector with a geometry for a form-complementary bedding of the metering tool within a module on the platform.

As well as the gripper device in a preferred embodiment also the metering system possesses at least one sensor for the detection of the position of the modules, for example of the reservoirs and the target containers. Thereby, it is preferred that the modules possess a marking, which is detectable by the sensor. Mechanic, electric, magnetic, acoustic marks, marks based on ultrasonic, optic, IR-optic as well as further marks known to the one skilled in the art within this context are conceivable for the detection of the position.

### Construction and control of the complete system

The operation of the complete workstation is based on an extensive software module, which supports the following functions and inputs:
- selection of methods for metering and/or preparation,
- definition of the workplatform comprising the definition of reservoirs and target containers,
- operation of the metering of solids and liquids,
- control of additional devices,
- import of metering arrays and use within already predefined methods for preparation.

The described system finds its application within a workplatform, which is positioned within the access area of a portal system (positioning system with three axes). That means that all components and/or objects, that is containers, metering tools, modules etc., can be accessed and the movable components can be moved within the workplatform. The coordinates of each of the components can either be predetermined by the operator or can be realized by the system, respectively are known (saved) by the system from previous runs.

The gripper system is mounted on a positioning arm of the portal system in an analogous way to a tool change system used in the field of robot automation. The metering tools can be positioned on the workplatform individually or as a magazine/array. This position or these positions can in turn be predetermined by the operator, or can be known to the system, or can be determined by the system. This matter applies analogously to further specifications of position, for example for reservoirs and target containers, but also for further modules of the platform as for example modules for heating, weighing, stirring or pipetting.

Another essential element of the workplatform is a measuring system, which is arranged as module on the platform. By means of said measuring system, the process of the metering is controlled. In a preferred embodiment, hereby the quantity of the sample which is taken up by the metering tool and the quantity of the sample which is already metered into a target container is detected gravimetrically and the difference is determined by means of the measuring system. In a preferred embodiment the measuring system is integrated within the metering system. Furthermore, it is preferred that the measuring system is a gravimetric load cell.

A superior operation module connects the function control of the individual components of the platform, respectively of the modules, and provides these to the user in form of methods for the treatment or preparation of substances. By means of the integration of this individual functionality within a graphic user interface in form of a method editor, versatile manual conditioning steps and preparation procedures for samples can be automated within the laboratory sector.

By means of the above described gripper device any quantities of solids can be taken up from different containers and can be transferred in a metered form into other containers. For this, common laboratory containers can be gripped with the gripper system and can be relocated and positioned newly to predetermined positions within the workplatform. The access to metering tools, which are positioned accordingly, is carried out analogously. Then, by means of the metering algorithms, the operation processes for the uptake and dispense of solid are controlled and the gravimetric metering values are recalled by the load cell and the metering process is controlled accordingly.

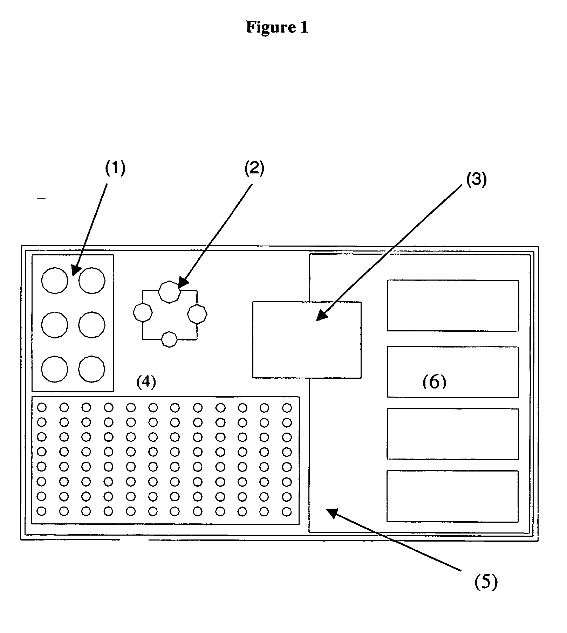

The before described device is in the following exemplified at hand of the figures 1 to 4.
Figure 1 shows a possible embodiment of the workstation of the invention in the top view. Thereby, (1) is the module with the reservoirs (which can be positioned for examples within the recesses of a plate), (2) is the module with the metering tools, wherein here holders for the metering tools are realized, (3) is the measuring system, for example a control scale, (4) is a module for target containers. (5) is the access area for the fluid metering and (6) is a put down area.
Figure 2 shows a lateral view of the gripper device with: the pneumatic drive (10), the electric drive (11), a setting spindle (12),the slide guidances (13) and the support pin (14) as support element. At the lower end the part of the support element is formed, which is provided with an adhesion layer and which contacts the object, which is held. The gripper device is surrounded by a housing (15).

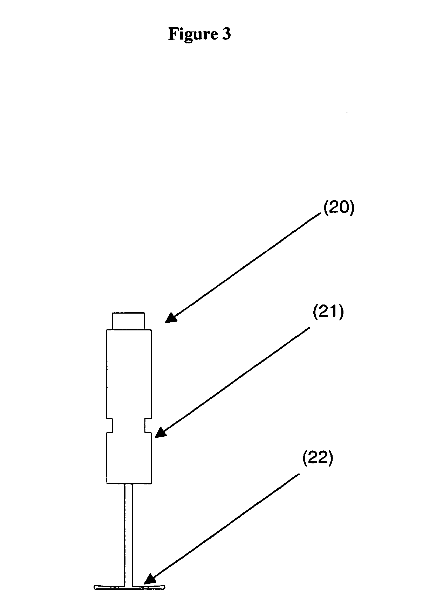

Figure 3 shows the lateral view of a metering tool (1) for the metering of (powdery) solids. Thereby, (20) is the support section for the clamping into the gripper device, (21) is the adequate support section for the bedding of the metering tool within a module on the platform, and (22) is the metering head.
Figure 4 finally shows the gripper device in a bottom view. Thereby, (30) is the slide guidance, (31) represents a support means, (32) is the clamping for the uptake of a metering tool and (33) is the bottom plate.

A process for providing at least one sample in a defined metered quantity by means of a laboratory workstation as described before, is now described :

Said process comprises at least the following steps:
- inserting of samples into reservoirs on modules of a platform,
- determination of the positions of the individual modules with the reservoirs and target containers,
- uptake of a metering tool,
- uptake of a sample quantity from a reservoir, and
- dispense of a sample quantity into a target container.

Thereby, the uptake of a sample quantity is repeated until the required metered quantity is achieved, wherein an already metered sample quantity and a sample quantity, which is again taken up by the metering tool, is controlled gravimetrically and the difference with the required metering quantity is compensated.

In the process of the invention for providing at least one sample in a defined metered quantity the step of the uptake of a sample quantity comprises at least one of the following sub steps:
- spiral dunking of the metering tool into the reservoir,
- dunking of a metering tool which is excited by vibration,
- stepwise dunking of the metering tool,
- stepwise dunking of the metering tool at positions which are determined by random generator,
- vertical pull out from the reservoir,
- stepwise pull out from the reservoir.

In a preferred embodiment the step "dispense of the sample quantity into a target container" comprises at least the following two sub steps:
- locating of the metering tool over the target container, and
- vibration of the metering tool.

Thereby, the vibration duration and the vibration intensity are adjusted continuously to the result of the weighing process in dependence on the required metered quantity. This is performed, as already mentioned above, by means of the self-optimizing algorithms.

### Reference numerals:

- (1): module with reservoirs
- (2): module with metering tools
- (3): measuring system
- (4): module for target containers
- (5): access area for fluid metering
- (6): put down area

- (10): pneumatic drive
- (11): electric drive
- (12): setting spindle
- (13): slide guidances
- (14): support means
- (15): housing

- (20): support section for gripper device
- (21): support section for bedding within a module on the platform
- (22): metering head

- (30): slide guidance
- (31): support means
- (32): clamping for the uptake of a metering tool
- (33): bottom plate

## Claims

1. Workstation for providing samples comprising at least
(i) a platform, which has at least one module (1) with at least one reservoir for a chemical educt and at least one module (4) with at least one target container,
(ii) a metering system for the metering of the sample,
(iii) a portal system, which is arranged above the platform and which maneuvers the metering system in all three directions in space,
(iv) a control device for controlling the movements of the metering system, and
(v) a measuring system (3) for the samples,
wherein the metering system has a gripper device for the uptake of a metering tool, which is supported within at least one module on the platform, **characterized in that** the metering system has a vibration device in order to excite the metering tool into a defined vibration.

2. Workstation according to claim 1, **characterized in that** the gripper device has four support means (14) being faced diametrically, which are movable in a concentric manner towards each other.

3. Workstation according to claim 2, **characterized in that** two support means (14) are supported in a pair of linear orientated slide bars (13), respectively,
wherein the pairs of slide bars are arranged perpendicularly towards each other.

4. Workstation according to claim 2 or 3, **characterized in that** the support means (14) have a geometry, which allows a form-complementary clamping with the geometry of the metering tool.

5. Workstation according to claim 4, **characterized in that** the support means (14) are exchangeable.

6. Workstation according to claim 5, **characterized in that** the support means (14) have a breaking point, in such a way that by breaking of said breaking point an overload of the gripper device or of the object gripped therewith is minimized or avoided.

7. Workstation according to claim 6, **characterized in that** the support means has an adhesion layer for an increased adhesion.

8. Workstation according to any one of claims 2 to 7, **characterized in that** support means (14) are movable by means of electrically activated jackscrews.

9. Workstation according to any one of claims 2 to 8, **characterized in that** the support means (14) are activated pneumatically for the clamping.

10. Workstation according to any one of claims 2 to 9, **characterized in that** the support means (14) are coupled with at least one sensor, which controls the clamping process.

11. Workstation according to any one of the preceding claims, **characterized in that** the measuring system (3) is arranged as module on the platform.

12. Workstation according to any one of the preceding claims, **characterized in that** the platform further has at least one module with a heating device and/or at least one module with a mixing device.

13. Workstation according to any one of the preceding claims, **characterized in that** the metering system has at least one sensor for the detection of the position of the modules.

14. Workstation according to claim 13, **characterized in that** the modules have at least one marking, which is detectable by the sensor.

## Patentansprüche

1. Arbeitsstation zum Bereitstellen von Proben, welche mindestens umfasst:
(i) eine Plattform, welche mindestens ein Modul (1) mit mindestens einem Reservoir für ein chemisches Ausgangsprodukt und mindestens ein Modul (4) mit mindestens einem Zielbehälter aufweist,
(ii) ein Dosiersystem zum Dosieren der Probe,
(iii) ein Portalsystem, welches über der Plattform angeordnet ist, und welches das Dosiersystem in alle drei Raumrichtungen bewegt,
(iv) eine Steuervorrichtung zum Steuern der Bewegungen des Dosiersystems und
(v) ein Messsystem (3) für die Proben,
wobei das Dosiersystem eine Greifervorrichtung zur Aufnahme eines Dosierwerkzeugs aufweist, welches in wenigstens einem Modul auf der Plattform gelagert ist, **dadurch gekennzeichnet, dass** das Dosiersystem eine Schwingungsvorrichtung aufweist, um das Dosierwerkzeug in eine definierte Schwingung zu versetzen.

2. Arbeitsstation nach Anspruch 1, **dadurch gekennzeichnet, dass** die Greifervorrichtung vier Haltemittel (14) aufweist, die diametral gegenüber liegen, welche konzentrisch aufeinander zu bewegbar sind.

3. Arbeitsstation nach Anspruch 2, **dadurch gekennzeichnet, dass** jeweils zwei Haltemittel (14) in einem Paar von linear ausgerichteten Gleitschienen (13) gelagert sind, wobei die Paare von Gleitschienen senkrecht zueinander angeordnet sind.

4. Arbeitsstation nach Anspruch 2 oder 3, **dadurch gekennzeichnet, dass** die Haltemittel (14) eine Geometrie aufweisen, die ein formkomplementäres Einspannen mit der Geometrie des Dosierwerkzeugs erlauben.

5. Arbeitsstation nach Anspruch 4, **dadurch gekennzeichnet, dass** die Haltemittel (14) austauschbar sind.

6. Arbeitsstation nach Anspruch 5, **dadurch gekennzeichnet, dass** die Haltemittel (14) eine Bruchstelle aufweisen, dergestalt, dass durch Brechen der besagten Bruchstelle eine Überbelastung der Greifervorrichtung oder des damit gegriffenen Objekts minimiert oder vermieden wird.

7. Arbeitsstation nach Anspruch 6, **dadurch gekennzeichnet, dass** die Haltemittel eine Haftschicht für eine verstärkte Haftreibung aufweisen.

8. Arbeitsstation nach einem der Ansprüche 2 bis 7, **dadurch gekennzeichnet, dass** die Haltemittel (14) über elektrisch betätigbare Verstellspindeln bewegbar sind.

9. Arbeitsstation nach einem der Ansprüche 2 bis 8, **dadurch gekennzeichnet, dass** die Haltemittel (14) zum Einspannen pneumatisch betätigbar sind.

10. Arbeitsstation nach einem der Ansprüche 2 bis 9, **dadurch gekennzeichnet, dass** die Haltemittel (14) mit wenigstens einem Sensor gekoppelt sind, der den Einspannprozess überwacht.

11. Arbeitsstation nach einem der vorstehenden Ansprüche, **dadurch gekennzeichnet, dass** das Messsystem (3) als ein Modul auf der Plattform angeordnet ist.

12. Arbeitsstation nach einem der vorstehenden Ansprüche, **dadurch gekennzeichnet, dass** die Plattform weiter mindestens ein Modul mit einer Heizvorrichtung und/oder mindestens ein Modul mit einer Mischvorrichtung aufweist.

13. Arbeitsstation nach einem der vorstehenden Ansprüche, **dadurch gekennzeichnet, dass** das Dosiersystem mindestens einen Sensor zur Positionserkennung der Module aufweist.

14. Arbeitsstation nach Anspruch 13, **dadurch gekennzeichnet, dass** die Module mindestens eine Markierung aufweisen, die vom Sensor detektierbar ist.

## Revendications

1. Poste de travail de laboratoire servant à fournir des prélèvements comprenant au moins
(i) une plateforme, qui présente au moins un module (1) avec au moins un réservoir pour un réactif chimique et au moins un module (4) avec au moins un récipient cible,
(ii) un système de mesure pour mesurer l'échantillon,
(iii) un système porte, qui est disposé au-dessus de la plateforme et qui permet de manoeuvrer le système de mesure dans les trois directions de l'espace,
(iv) un dispositif de contrôle pour contrôler les mouvements du système de mesure, et
(v) un système de mesure (3) pour les échantillons,
dans lequel le système de mesure présente un dispositif de préhension pour la montée d'un outil de mesure, qui est soutenu à l'intérieur d'au moins un module sur la plateforme, **caractérisé en ce que** le système de mesure présente un dispositif de vibration afin d'exciter l'outil de mesure pour qu'il présente une vibration définie.

2. Poste de travail de laboratoire selon la revendication 1, **caractérisé en ce que** le dispositif de préhension présente quatre moyens de support (14) étant disposés face à face diamétralement, qui peuvent être déplacés d'une manière concentrique les uns vers les autres.

3. Poste de travail de laboratoire selon la revendication 2, **caractérisé en ce que** deux moyens de support (14) sont soutenus en une paire de glissières de guidage linéaires orientées (13), respectivement, dans lequel les paires de glissières de guidage sont disposées perpendiculairement les unes vers les autres.

4. Poste de travail de laboratoire selon la revendication 2 ou la revendication 3, **caractérisé en ce que** le moyen de support (14) présente une géométrie, qui permet un serrage de forme complémentaire à la géométrie de l'outil de mesure.

5. Poste de travail de laboratoire selon la revendication 4, **caractérisé en ce que** le moyen de support (14) peut être échangé.

6. Poste de travail de laboratoire selon la revendication 5, **caractérisé en ce que** le moyen de support (14) présente un point de rupture, de telle sorte que par la rupture dudit point de rupture une surcharge du dispositif de préhension ou de l'objet pris par celui-ci est minimisée ou évitée.

7. Poste de travail de laboratoire selon la revendication 6, **caractérisé en ce que** le moyen de support présente une couche d'adhésion pour une adhésion accrue.

8. Poste de travail de laboratoire selon l'une quelconque des revendications 2 à 7, **caractérisé en ce que** le moyen de support (14) peut être déplacé au moyen de vis de calage activées électriquement.

9. Poste de travail de laboratoire selon l'une quelconque des revendications 2 à 8, **caractérisé en ce que** le moyen de support (14) est activé de manière pneumatique pour le serrage.

10. Poste de travail de laboratoire selon l'une quelconque des revendications 2 à 9, **caractérisé en ce que** le moyen de support (14) est couplé à au moins un capteur, qui contrôle le processus de serrage.

11. Poste de travail de laboratoire selon l'une quelconque des revendications précédentes, **caractérisé en ce que** le système de mesure (3) est disposé sous la forme d'un module sur la plateforme.

12. Poste de travail de laboratoire selon l'une quelconque des revendications précédentes, **caractérisé en ce que** la plateforme comprend en outre au moins un module avec un dispositif de chauffage et/ou au moins un module avec un dispositif de mélange.

13. Poste de travail de laboratoire selon l'une quelconque des revendications précédentes, **caractérisé en ce que** le système de mesure présente au moins un capteur pour détecter la position des modules.

14. Poste de travail de laboratoire selon la revendication 13, **caractérisé en ce que** les modules présentent au moins un marqueur, qui peut être détecté par le capteur.
